# EUROPÄISCHE PATENTSCHRIFT

(11) **EP 1 611 801 B1**
(45) Veröffentlichungstag und Bekanntmachung des Hinweises auf die Patenterteilung: **07.03.2007**
(21) Anmeldenummer: 04015282.9
(22) Anmeldetag: 30.06.2004
(51) Int. Cl.: A23P 1/08, A23L 1/00

(54) **Backteigauflockerung mittels CO2**
Batter leavening using carbon dioxide
Pâte levée par dioxyde de carbone

(43) Veröffentlichungstag der Anmeldung: 04.01.2006
(73) Patentinhaber: FRoSTA Aktiengesellschaft, 27572 Bremerhaven (DE)
(72) Erfinder: Eckelt, Britta, 27607 Langen (DE); Gaida, Frank, 27572 Bremerhaven (DE); Buschmann, Urban, 31535 Neustadt (DE)
(74) Vertreter: Fleck, Thomas

(56) Entgegenhaltungen:
- EP-A- 1 269 868
- GB-A- 1 089 014
- US-A- 4 764 386
- US-A- 5 194 271

## Beschreibung

Die Erfindung betrifft ein Verfahren zum Herstellen von mit Backteig umhüllten, stückigen Lebensmitteln nach dem Oberbegriff des Anspruchs 1. Solche Verfahren sind im Stand der Technik bekannt, siehe hierzu beispielsweise die GB-A-1089014, US-A-4,764,386 und US-A-5,194,271.

Panaden (Teige), die auf Mehl basieren, verkleistern beim Frittieren (Erhitzen) zu durchgehenden Schichten, einer Art "Pfannkuchen", die beim Verzehren als "pappig" oder "lederig" empfunden werden.

Um eine Knusprigkeit des Backteigs zu erreichen, wird in den Rezepturen oft das sogenannte Backpulver verwendet. Es ist eine Mischung Natriumhydrogencarbonat und einem Säuerungsmittel (z.B. Dinatriumdiphosphat). Als Säuerungsmittel können auch Zitronensäure, Weinsäure oder Weinstein verwendet werden. Beim Frittieren oder Zubereiten durch die Wärmeeinwirkung in Anwesenheit von Feuchtigkeit entwickelt sich aus den Komponenten des Backpulvers das gasförmige CO₂, das durch die Blässchenbildung die Struktur auflockert.

Es ist bspw. auch aus Kochbüchern bekannt, dass kohlensäurehaltige Getränke, wie Bier oder Mineralwasser, zur Auflockerung des Backteiges eingesetzt werden. Dieser Effekt ist aber nicht sehr stark, so dass bei Verwendung von Bier oft auch noch zusätzlich der Eischnee eingesetzt wird.

Die Verwendung vom Backpulver hat den Nachteil, dass dem Produkt Zusatzstoffe zugesetzt werden, von denen Reste zurückbleiben. Die anderen bekannten Methoden zur Backteigauflockerung lassen sich nur im wesentlichen im Küchenmaßstab einsetzen und die auflockernde Wirkung ist nur mäßig.

Der Erfindung liegt deshalb die Aufgabe zugrunde, das eingangs genannte Verfahren und die panierten Lebensmittel derart zu verbessern, dass eine knusprige Panadenschicht über einem weichen Lebensmittelstück in einfacher und schneller Weise erzielt wird. Die Knusprigkeit der Backteig-Panade ist von besonderer Bedeutung, da beim Verzehr des Produktes zuerst eine locker-knusprige Schicht, dann eine "weiche" Schicht (Fisch oder Geflügel) und dann wieder eine knusprige Schicht durchbissen wird, wodurch sich eine bevorzugte Produktkonstruktion ergeben kann, die angestrebt wird. Diese Aufgabe wird erfindungsgemäß durch das im Anspruch 1 beschriebene Verfahren gelöst.

Dieses setzt also ein inertes Gas wie CO₂ von Gefriertemperatur des Backteiges (bis zu -2°C) bis +25°C in physikalischer Weise direkt bzw. unmittelbar ein, so dass keine anorganischen oder organischen Reststoffe im Lebensmittel zurück bleiben, wobei unmittelbar nach dem Auftragen oder Überziehen der Lebensmittel mit dem Backteig letztere innerhalb von weniger als 300 Sek., insbesondere 20 Sek., vorteilhafterweise 10 Sek., erwärmt werden.

Es dürfte einleuchten, dass das Verfahren in einfacher, schneller Weise durchgeführt werden kann, so dass es besonders wirtschaftlich ist. Weitere Vorteile und Merkmale gehen aus den Unteransprüchen hervor, die auch gemeinsam mit dem Hauptanspruch von erfinderischer Bedeutung sein können.

Im folgenden werden zwei Ausführungsbeispiele der Erfindung anhand der Zeichnung näher erläutert, die dem besseren Verständnis der Erfindung dienen soll, auf das dieselbe jedoch nicht beschränkt ist. Es zeigt:
Fig. 1
   eine schematische Querschnittsansicht durch das Tauchbad, welches die stückigen, zu panierenden Lebensmittel durchlaufen.

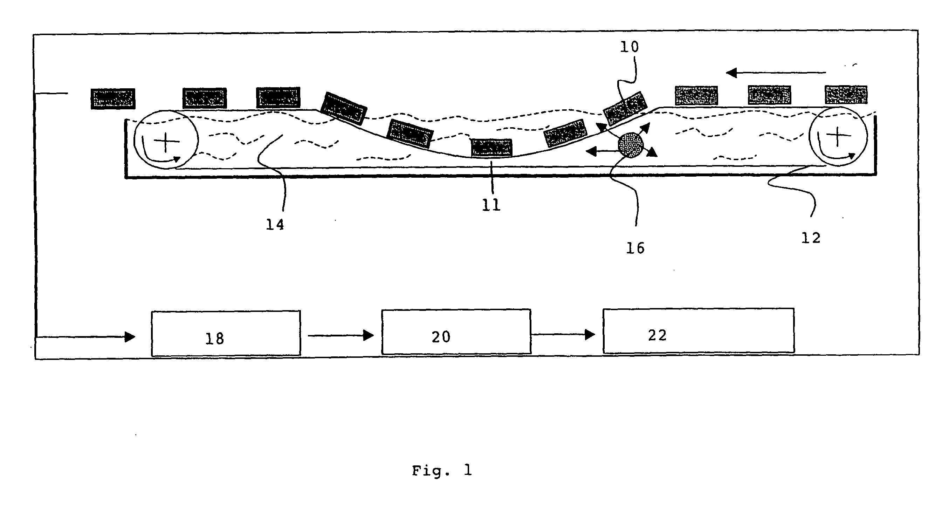

Das erfindungsgemäße Verfahren zur Auflockerung von Backteigen ist in Fig. 1 dargestellt. Das Produkt oder stückige Lebensmittel 10 (Fisch, Geflügel, Fleisch, Gemüse, Obst etc.) wird auf einem Band 12 transportiert. Das Band 12 führt durch ein Bad 14, gefüllt mit Backteig. Das Endlos-Transportband 12 senkt sich auf einer bestimmten Stelle mit dem Produkt 10 in den Backteig, wodurch das Produkt 11 vollständig in den Backteig eingetaucht wird. An einer bestimmten Stelle des Backteigbades 14 ist eine Düse 16 angeordnet, aus der kontinuierlich gasförmiges CO₂ ausströmt.

Um die Konzentration an gelösten CO₂ in dem Backteig möglichst hoch zu halten ggf. zu sättigen, wird der Backteig im Temperaturbereich um 0°C gehalten. Die besten Ergebnisse sind im Temperaturbereich von +0,2 bis + 2°C zu erreichen. Bei höheren Temperaturen ist der Effekt des CO₂ -Auflösens nicht mehr so stark ausgeprägt. Eine stärkere Erweiterung des Temperaturbereiches schwächt deutlich den Effekt der Auflockerung des Backteiges in dem erfindungsgemäßen Verfahren. Diese Effekte korrespondieren mit dem temperaturabhängigen Lösungsverhalten des CO₂, bzw. dem Fehlen des Wassers als Lösungsmittel für das CO₂ in der Nähe der Gefriertemperatur.

Nach dem Tauchbad 14 werden die Produkte 11 direkt einem Erhitzungsschritt 18, z.B. einer Fritteuse, zugeführt. Beim Frittieren "explodiert" das im Backteig angereicherte CO₂ und lockert die Struktur des sonst festen Backteiges auf. Durch die schnelle Erwärmung des Backteiges wird die lockere Struktur fixiert.

### Beispiel 1:

Fischstücke mit einem Gewicht von 50 g werden zunächst mit einem Backteig (Viskosität: 17 Sek. mit 6mm Ford-Becher gemessen) vorüberzogen (5 g). Anschließend werden sie mit einer Trockenpanade bedeckt. So vorbereitete Fischstücke werden in dem Tauchverfahren (siehe Abb.) mit dem CO₂ -angereicherten Backteig bei 0°C bedeckt (Menge 12,9 g, Viskosität des Backteiges: 10 Sek. mit 6mm Ford-Becher). Innerhalb von 10 Sek. wird das Produkt in einer Fritteuse, gefüllt mit Sonnenblumenöl bei einer Temperatur von 195 °C in 45 Sek. frittiert.

Das Produkt wird anschließend gefrostet. Nach dem Frosten 20 kann das Produkt 11 verpackt 22 werden und dann vom Verbraucher sowohl in der Pfanne, Fritteuse als auch im Backofen zubereitet werden.

### Beispiel 2:

Eine Mischung aus Blumenkohl Röschen, Champignons ganze Köpfe und Kohlrabi-Stücken werden im Tauchverfahren durch den Backteig durchgezogen, wobei der Backteig mit gasförmigen CO₂ angereichert wird. Der Backteig hat eine Viskosität von 2,0 dPas bei 18°C. Im direkt darauf folgendem Frittierölbad (195°C, 40 Sek.) wird der Teig fixiert und durch das CO₂ aufgelockert.

Das Produkt kann sowohl in der Fritteuse, Backofen oder in der Pfanne zubereitet werden.

### Beispiel 3:

Hähncheninnefilets mit einem Stückgewicht von 7 bis 20 g werden mit einem Backteig (Viskosität: 3,1 dPas, 18 °C, gemessen mit Haacke VTO2) vorgecoatet. Im zweiten Schritt werden sie mit einer Trockenpanade benetzt. Anschließend werden die vorbereiteten Hähncheninnenfilets im Tauchverfahren mit einem mit CO2 angereicherten Backteig (Viskosität: 1,8 dPas, 18 °C, gemessen mit Haacke VT02) bei + 1 °C bedeckt. Innerhalb von weiteren 5 sek. werden die Geflügelstücke einer Friteuse zugeführt und erwärmt (195 °C, 45 °C). Nach dem Erwärmen wird das Produkt zwecks Erreichung einer Lagerfähigkeit gefrostet.

### Beispiel 4:

Bananenscheiben in einer Stärke von 20 mm werden mit einem mit CO2 angereicherten Backteig (Viskosität: 1,9 dPas 18 °C, gemessen mit Haacke VT02) bei 0°C überzogen. Anschließend werden die Stücke einer Friteuse zugeführt und wärmebehandelt (190 °C, 40 sek). Die Bananenstücke werden weiter zwecks Erreichung einer Lagerfähigkeit auf mind. -18°C gefrostet.

### Beispiel 5:

Kartoffeln geschnitten (Achtel-Teile aus der Kartoffel), gegart und gefrostet werden zunächst mit einem Backteig vorbehandelt und dann mit einer Trockenpanade bedeckt. Anschließend werden sie mit einem mit CO2 angereicherten Backteig (Viskosität: 2 dPas 18 °C, gemessen mit Haacke VT02) bei +3°C überzogen. Im Anschluss werden die Stücke einer Friteuse zugeführt und wärmebehandelt (195 °C, 45 sek). Die Kartoffelstücke werden weiter zwecks Erreichung einer Lagerfähigkeit auf mind. -18°C gefrostet.

## Patentansprüche

**1.** Verfahren zum Herstellen von mit Backteig umhüllten, stückigen Lebensmitteln, bei dem ein fließfähiger Backteig (Panade) im Tauchverfahren kontinuierlich auf die stückigen Lebensmittel aufgetragen und mittels eines durch anschließende Erwärmung frei werdenden Gases aufgelockert wird, **dadurch gekennzeichnet, dass** man als Gas Kohlendioxid von Gefriertemperatur des Backteiges bis +25°C unmittelbar in den Backteig einbringt, und wobei unmittelbar nach dem Auftragen oder Überziehen der Lebensmittel mit dem Backteig letztere innerhalb von weniger als 300 Sek., insbesondere 20 Sek. erwärmt werden.

**2.** Verfahren nach Anspruch 1, **dadurch gekennzeichnet, dass** man Kohlendioxid im Temperaturbereich zwischen -0,2° C und +10° C, insbesondere +0,5° und +2° C in den Backteig einbringt.

**3.** Verfahren nach A 1 bis 2, **dadurch gekennzeichnet, dass** das mit Backteig umhüllte, stückige Lebensmittel nach dem Erwärmen gefrostet wird.

**4.** Verfahren nach einem oder mehreren der Ansprüche 1 bis 3, **dadurch gekennzeichnet, dass** die stückigen Lebensmittel zunächst mit einem Backteig vorüberzogen und dann mit einer Trockenpanade bedeckt werden.

**6.** Verfahren nach einem oder mehreren der vorstehenden Ansprüche 1 bis 4, **dadurch gekennzeichnet, dass** die Zugabe des CO₂ durch eine oder mehrere feinporige Düsen erfolgt.

**7.** Verfahren nach einem oder mehreren der vorstehenden Ansprüche 1 bis 5, **dadurch gekennzeichnet, dass** die Viskosität des Backteigs zwischen 0,2 dPas und 30 dPas bei 18°C liegt.

## Claims

**1.** Process for producing dough-enveloped, lumpy foods, in which a flowable dough (panada) using a dipping process is continuously applied to the lumpy food and is leavened by means of a gas released through the subsequent heating, **characterized in that** as gas carbon dioxide is introduced directly into the dough from the freezing point of the latter to +25°C and immediately following the application or coating of the food with the dough heating takes place within less than 300 seconds, particularly 20 seconds.

**2.** Process according to claim 1, **characterized in that** carbon dioxide is introduced into the dough in the temperature range -0.2 to +10°C, particularly +0.5 to +2°C.

**3.** Process according to claims 1 and 2, **characterized in that** the dough-enveloped, lumpy food is frosted after heating.

**4.** Process according to one or more of the claims 1 to 3, **characterized in that** the lumpy food is initially precoated with a dough and then covered with a dry panada.

**6.** Process according to one or more of the claims 1 to 4, **characterized in that** the addition of the CO₂ takes place through one or more fine-pored nozzles.

**7.** Process according to one or more of the claims 1 to 5, **characterized in that** the viscosity of the dough is between 0.2 and 30 dPas at 18°C.

## Revendications

**1.** Procédé de fabrication de produits alimentaires en morceaux enrobés de pâte à frire, dans lequel une pâte à frire fluide (panure) est appliquée en continu sur les produits alimentaires en morceaux qui y sont plongés et est rendue friable au moyen d'un gaz libéré par chauffage subséquent, **caractérisé en ce qu'**on introduit directement comme gaz dans la pâte à frire du dioxyde de carbone depuis la température de congélation de la pâte jusqu'à 25°C et, immédiatement après l'application de la pâte à frire sur les produits alimentaires ou leur enrobage avec cette pâte, on chauffe ces derniers en moins de 300 secondes, notamment en 20 secondes.

**2.** Procédé suivant la revendication 1, **caractérisé en ce qu'**on introduit du dioxyde de carbone dans la pâte à frire dans une plage de température comprise entre -0,2°C et +10°C, notamment entre +0,5°C et +2°C.

**3.** Procédé suivant les revendications 1 à 2, **caractérisé**& en ce que le produit alimentaire en morceaux enrobé de pâte à frire est congelé après le chauffage.

**4.** Procédé suivant l'une ou plusieurs des revendications 1 à 3, **caractérisé en ce que** les produits alimentaires en morceaux sont tout d'abord préenrobés avec la pâte à frire puis recouverts d'une panure sèche.

**6.** Procédé suivant l'une ou plusieurs des revendications 1 à 4 précédentes, **caractérisé en ce que** l'addition de CO₂ est effectuée par une ou plusieurs buses à micropores.

**7.** Procédé suivant l'une ou plusieurs des revendications 1 à 5 précédentes, **caractérisé en ce que** la viscosité à 18°C de la pâte à frire se situe entre 0,2 dPas et 30dPas.
